Europäisches Patentamt

European Patent Office

Office européen des brevets

(11) Veröffentlichungsnummer: **0 189 835**
A2

# (12) EUROPÄISCHE PATENTANMELDUNG

(21) Anmeldenummer: 86100831.6

(22) Anmeldetag: 22.01.86

(51) Int. Cl.⁴: $B\ 30\ B\ 9/02$
$B\ 01\ D\ 25/12$

(30) Priorität: 26.01.85 DE 3502692

(43) Veröffentlichungstag der Anmeldung:
06.08.86 Patentblatt 86/32

(84) Benannte Vertragsstaaten:
AT BE CH DE FR GB IT LI NL SE

(71) Anmelder: BASF Aktiengesellschaft
Carl-Bosch-Strasse 38
D-6700 Ludwigshafen(DE)

(72) Erfinder: Cunz, Werner
Anglerstrasse 124
D-6700 Ludwigshafen(DE)

(54) Lagerung einer Filterpresse.

(57) Lagerung einer Filterpresse, wobei die Filterpresse mittels einer Tragkonstruktion aufgehängt ist.

## Lagerung einer Filterpresse

Die Erfindung betrifft die Lagerung einer Filterpresse.

Es ist bekannt, Filterpressen auf ebenen Betonböden, erhöhten Beton- oder Mauerwerksfundamenten aufzustellen, wobei sich die Filterpressenrahmen und die für die Bedienung der Filterpressen notwendigen Bedienungsbühnen auf dem Betonboden oder den Fundamenten abstützen.

Von Nachteil ist hierbei die aufwendige Herstellung der Fundamente, jedoch erweist sich als besonders nachteilig, daß aufgrund der in den Filterpressen zu verarbeitenden Medien - häufig Säuren, Laugen, Lösungsmittel - die Auswahl der zur Verfügung stehenden Werkstoffe für die Fundamente und Böden begrenzt sind und einige Werkstoffe - beispielsweise Beton, Ziegelmauerwerk - nicht verwendbar sind. Auch Fundamente aus "säure- und laugebeständigen" keramischen Steinen, in Kunstharzkitten gemauert, halten diesen aggressiven Medien oft nicht stand. Mechanische Einwirkungen vermindern häufig zusätzlich die Standfestigkeit der Fundamente, so werden beispielsweise Fundamente durch "das Wandern" der Filterpressen während des Preßvorganges abgeschert. Dies wurde inzwischen teilweise durch den Einbau von Gleitlagern in die Fundamente vermindert, aber häufig werden die Gleitlager trotz Bau aus Sonderstählen durch die stark aggressiven Medien in kürzester Zeit zerstört.

Des weiteren lassen sich trotz aufwendiger Konstruktionen und Schutzvorrichtungen Beschädigungen der Fundamente durch Gabelstapler nicht vermeiden. Diese Nachteile bewirken teure Wartungs- und Reperaturarbeiten an Böden und Fundamenten, bzw. von Zeit zu Zeit Erneuerung der Fundamente. All dies verursacht hohe Kosten und häufig Produktionsausfälle.

Der Erfindung liegt daher die Aufgabe zugrunde, diese Kosten durch eine andere Aufstellungsart der Filterpressen deutlich zu senken.

Diese Aufgabe wird erfindungsgemäß dadurch gelöst, daß die Filterpresse mittels einer Tragkonstruktion aufgehängt ist.

Die mit der Erfindung erzielten Vorteile bestehen insbesondere darin, daß die Erstellung der Fundamente mit all den geschilderten und nachfolgenden Problemen entfallen. Des weiteren wird durch die Aufhängung der Filterpressen und durch die Kopffreiheit unter den Filterpressen erreicht, daß das Preßgut mechanisch - beispielsweise durch Transportwagen oder Förderbänder - abtransportiert werden kann, was wiederum eine Senkung des Bedienungsaufwands für die Filterpressen zur Folge hat.

0189835

Ein Ausführungsbeispiel der Erfindung ist in der Zeichnung dargestellt und wird im folgenden näher beschrieben.

Es zeigen

Figur 1    einen Querschnitt durch die erfindungsgemäße Aufhängung einer Filterpresse, und

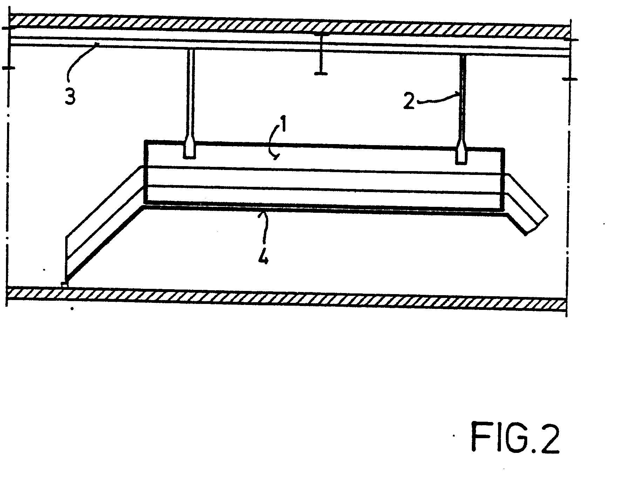

Figur 2    eine Seitenansicht der erfindungsgemäßen Aufhängung einer Filterpresse.

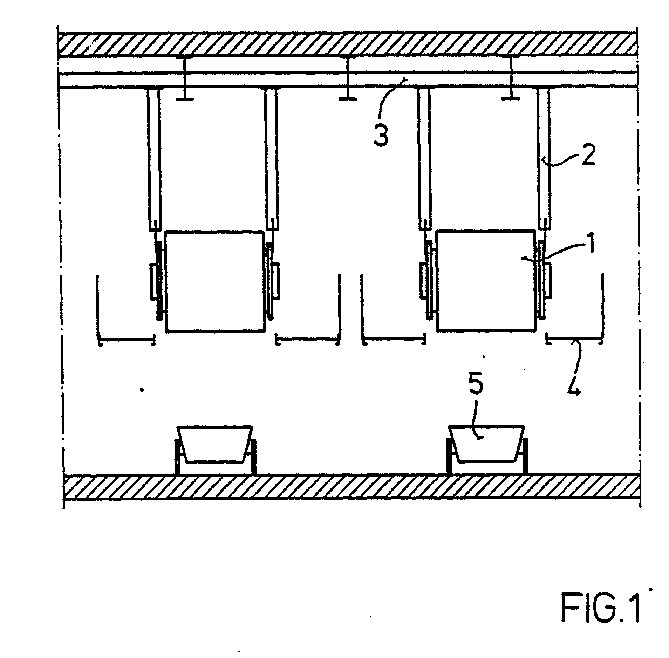

Gemäß Figur 1 wird die Filterpresse 1 am Filterpreßrahmen mittels einer Tragkonstruktion 2 - bestehend aus Stahlprofilen - an einer Deckenkonstruktion 3 derart aufgehängt, daß unterhalb der Filterpresse Kopffreiheit für das Bedienungspersonal besteht. Die Bedienung der Filterpresse erfolgt über Begehungsbühnen 4, der Abtransport des Preßgutes - wie dargestellt - über Transportwagen 5.

Patentanspruch

Lagerung einer Filterpresse, dadurch gekennzeichnet, daß die Filterpresse mittels einer Tragkonstruktion aufgehängt ist.

O.z. 0050/37540

0189835

FIG.1

FIG.2